# EUROPEAN PATENT APPLICATION

(11) **EP 4 099 469 A1**
(43) Date of publication of application: **07.12.2022**
(21) Application number: 21867912.4
(22) Date of filing: 12.04.2021
(51) Int. Cl.: H01M 10/0567

(54) **ELECTROCHEMICAL DEVICE AND ELECTRONIC DEVICE COMPRISING SAME**

(71) Applicant: Ningde Amperex Technology Limited, Zhangwan Town, Jiaocheng District Ningde City Fujian 352100 (CN)
(72) Inventor: CUI, Hui, Ningde Fujian 352100 (CN); WANG, Xiang, Ningde Fujian 352100 (CN); TANG, Chao, Ningde Fujian 352100 (CN)
(74) Representative: Klunker IP Patentanwälte PartG mbB
(86) International application number: PCT/CN2021/086527
(87) International publication number: WO 2022/217414

(57) **Abstract**

This application discloses an electrochemical device and an electronic device containing same. The electrochemical device according to this application includes an electrolyte. The electrolyte includes a non-fluorinated cyclic carbonate and an ether multi-nitrile compound. The non-fluorinated cyclic carbonate includes ethylene carbonate. Based on a mass of the electrolyte, a content of the ethylene carbonate is X%, and a content of the ether multi-nitrile compound is A%. The electrochemical device further includes a positive electrode. The positive electrode includes a positive electrode active material layer and a positive current collector. The positive electrode active material layer includes a positive electrode active material . The positive electrode active material includes an element M. The element M includes at least one of Al, Mg, Ti, Zr, or W. Based on a mass of the positive electrode active material, a content of the element M is C ppm, 1000 ≤ C ≤ 22000, X + A ≤ 15, and 133 ≤ C/A ≤ 22000. The electrochemical device according to this application achieves excellent high-temperature intermittent cycle performance and high-temperature cycle performance.

## Description

### TECHNICAL FIELD

This application relates to the field of energy storage, and in particular, to an electrochemical device and an electronic device containing same.

### BACKGROUND

Electrochemical devices, such as a lithium-ion battery, are widely used in the fields such as wearable devices, smart phones, unmanned aerial vehicles, and notebook computers by virtue of advantages such as a high working voltage, a high energy density, environmental friendliness, stable cycling, and safety. With the progress of modern information technology and the expansion of the application of the lithium-ion battery, higher requirements such as a high energy density, a long cycle life, and excellent storage features are posed on the lithium-ion battery. The interaction between an electrolyte and a positive or negative electrode exerts a huge impact on such features. Especially, when the working voltage is increased to 4.4 V to improve the energy density, the instability of the interface between the electrolyte and the positive electrode increases, the gassing of the battery under a high temperature is severe, and the cycle performance and indirect charge and discharge performance deteriorate, thereby bottlenecking the performance of the battery drastically. To improve the features of the lithium-ion battery, existing lithium-ion battery technologies usually take an approach by simply optimizing the electrolyte or improving the positive electrode, and lack in-depth research of the entire system, and therefore, are unable to achieve overall performance enhancement.

### SUMMARY

According to a first aspect, this application provides an electrochemical device. The electrochemical device includes an electrolyte. The electrolyte includes a non-fluorinated cyclic carbonate and an ether multi-nitrile compound. The non-fluorinated cyclic carbonate includes ethylene carbonate. Based on a mass of the electrolyte, a content of the ethylene carbonate is X%, and a content of the ether multi-nitrile compound is A%. The electrochemical device further includes a positive electrode. The positive electrode includes a positive electrode active material layer and a positive current collector. The positive electrode active material layer includes a positive electrode active material. The positive electrode active material includes an element M. The element M includes at least one of Al, Mg, Ti, Zr, or W. Based on a mass of the positive electrode active material, a content of the element M is C ppm, 1000 ≤ C ≤ 22000, X + A ≤ 15, and 133 ≤ C/A ≤ 22000. According to some embodiments of this application, 400 ≤ C/A ≤ 4000.

According to some embodiments of this application, the ether multi-nitrile compound includes at least one of an ether dinitrile compound or an ether trinitrile compound, and, based on the mass of the electrolyte, a content of the ether dinitrile compound is Y%, and a content of the ether trinitrile compound is Z%, where 0.1 ≤ Y+Z ≤ 7.5, and 2.5 ≤ X ≤ 14.

According to some embodiments of this application, the electrochemical device satisfies at least one of conditions (a) to (c): (a) 0 < Y ≤ 3.5; (b) 0 ≤ Z ≤ 4.0; and (c) 133 < C/Y ≤ 12500.

According to some embodiments of this application, the ether multi-nitrile compound includes at least one of nitrile compounds represented by Formula I or Formula II:

NC-R₁₁-H₂C-R₁₂-CN Formula I;

and

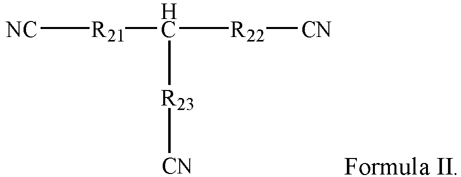

In Formula I and Formula II, R₁₁, R₁₂, R₂₁, R₂₂, and R₂₃ are each independently selected from -(CH₂)a-O-(CH₂)b-, a and b are each independently an integer in 0 to 10, and a and b are not both 0 at the same time.

According to some embodiments of this application, the electrolyte further includes a multi-nitrile compound, and, based on the mass of the electrolyte, a content of the multi-nitrile compound is D%, where 0.02 ≤ Y/D ≤ 1.0.

According to some embodiments of this application, the multi-nitrile compound includes at least one of nitrile compounds represented by Formula IV:

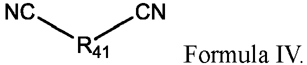

In Formula IV, R₄₁ is selected from 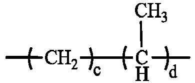 or 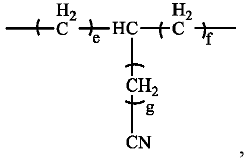 c, d, e, f, and g are each independently an integer in 0 to 10, and c and d are not both 0 at the same time.

According to some embodiments of this application, the content of the ether multi-nitrile compound in 1 gram of the positive electrode active material of the electrochemical device ranges from 0.0001 g to 0.06 g.

According to some embodiments of this application, the element M satisfies at least one of conditions (d) to (f): (d) the element M contains Al and at least one of Mg, Ti, Zr, or W; (e) the element M contains Mg and at least one of Al, Ti, Zr, or W; or (f) the element M contains Al and Mg, and at least one of Ti, Zr, or W.

According to some embodiments of this application, when the condition (d) is satisfied, based on the mass of the positive electrode active material, a content of Al is C1 ppm, and 0.2 ≤ C1/C < 1.

According to some embodiments of this application, when the condition (f) is satisfied, based on the mass of the positive electrode active material, a content of Al is C1 ppm, a content of Mg is C2 ppm, and 0.001 ≤ C2/C1 < 1.

According to some embodiments of this application, the positive electrode active material further includes an element M2. The element M2 includes at least one of La, Y, F, Na, Fe, Zn, or Cu.

According to some embodiments of this application, a thickness of the positive electrode active material layer is 40 µm to 130 µm.

According to a second aspect, this application further provides an electronic device. The electronic device includes the electrochemical device according to the first aspect of this application.

### DETAILED DESCRIPTION OF EMBODIMENTS

The embodiments of this application will be described below in detail.

An electrochemical device provided in this application includes an electrolyte. The electrolyte includes a non-fluorinated cyclic carbonate and an ether multi-nitrile compound. The non-fluorinated cyclic carbonate includes ethylene carbonate. Based on a mass of the electrolyte, a content of the ethylene carbonate is X%, and a content of the ether multi-nitrile compound is A%. The electrochemical device further includes a positive electrode. The positive electrode includes a positive electrode active material layer and a positive current collector. The positive electrode active material layer includes a positive electrode active material. The positive electrode active material includes an element M. The element M includes at least one of Al, Mg, Ti, Zr, or W. Based on a mass of the positive electrode active material, a content of the element M is C ppm, 1000 ≤ C ≤ 22000. The electrochemical device satisfies X + A ≤ 15 and 133 ≤ C/A ≤ 22000.

The non-fluorinated cyclic carbonate can be reduced to form a better SEI to facilitate a cycling process. However, the non-fluorinated cyclic carbonate is scarcely stable under a high temperature, and is prone to failure caused by gassing at the end of the high-temperature intermittent cycling. The ether multi-nitrile compound contains a specific nitrile functional group that can well separate the easily oxidizable ingredients in the electrolyte from a surface of the positive electrode, thereby greatly reducing the effect of oxidation caused to the electrolyte by the surface of the positive electrode of the lithium-ion battery that is in a charging state, and suppressing the gassing of the lithium-ion battery during high-temperature intermittent cycling. However, the impedance of the ether multi-nitrile compound is relatively high. When the content of the ether multi-nitrile compound is too high, cycle polarization increases, and cycle attenuation increases. When the non-fluorinated cyclic carbonate coordinates with the ether multi-nitrile compound to satisfy the relationship of X+A ≤ 15, an excellent SEI can be formed, the oxidation and gassing of the non-fluorinated cyclic carbonate and the positive electrode are decreased, and the high-temperature intermittent cycle performance and the high-temperature cycle performance are improved effectively. After being delithiated, the positive electrode material is less structurally stable, and is prone to emit oxygen and dissolve out transition metal (Co). After being doped with the element M, the dopant element M occupies lattice spacing. An M-O bond formed after delithiation of the positive electrode is stronger than a Co-O bond, so as to relieve emission of oxygen, prevent dissolution of cobalt, and stabilize the structure. However, when the dopant content is too high, the working of effective lithium will be affected, and polarization will increase. The ether multi-nitrile compound can stabilize, on the interface, the dissolution of cobalt from the positive electrode, and serve a function of coordinating with the element M. When C/A satisfies 133 ≤ C/A ≤ 22000, the overall polarization of the battery can be decreased, and the high-temperature cycle performance can be improved.

According to some embodiments of this application, X+A is 3, 4, 5, 6, 7.5, 8.0, 8.5, 9.0, 9.5, 10, 10.5, 11.0, 11.5, 12.0, 12.5, 13.0, 13.5, 14.0, or 14.5, or any range therebetween. In some embodiments, 5 ≤ X + A ≤ 15. In some embodiments, 7.5 ≤ X + A ≤ 15.

According to some embodiments of this application, C/A is 200, 300, 400, 500, 700, 900, 1200, 1500, 1700, 2000, 2500, 3000, 3500, 4000, 5000, 6000, 7000, 8000, 9000, 10000, 12000, 15000, 17000, or 20000, or any range therebetween. In some embodiments, 133 ≤ C/A ≤ 12000. In some embodiments, 400 ≤ C/A ≤ 10000. In some embodiments, 500 ≤ C/A ≤ 8000.

According to some embodiments of this application, the ether multi-nitrile compound includes at least one of an ether dinitrile compound or an ether trinitrile compound.

According to some embodiments of this application, the ether multi-nitrile compound includes an ether dinitrile compound and an ether trinitrile compound. Based on the mass of the electrolyte, a content of the ether dinitrile compound is Y%, and a content of the ether trinitrile compound is Z%, where 0.1 ≤ Y+Z ≤ 7.5. In some embodiments, Y+Z is 0.3, 0.5, 1.0, 1.5, 2.0, 2.5, 3.0, 3.5, 4.0, 4.5, 5.0, 5.5, 6.0, 6.5, 7.0, or the like. In some embodiments of this application, 0.3 ≤ Y+Z ≤ 4.0.

According to some embodiments of this application, based on the mass of the electrolyte, the content X% of the ethylene carbonate satisfies 2.5 ≤ X ≤14. For example, X is 3.0, 4.0, 5.0, 6.0, 6.5, 7.0, 7.5, 8.0, 8.5, 9.0, 9.5, 10.0, 10.5, 11.0, 11.5, 12.0, 12.0, 13.0, 13.5, or the like. In some embodiments, 3.0 ≤ X ≤ 14.

According to some embodiments of this application, based on the mass of the electrolyte, the content of the ether dinitrile compound is Y%, and 0 < Y ≤ 3.5. For example, Y is 0.1, 0.5, 1.0, 1.5, 2.0, 3.0, or the like. In some embodiments, 0 < Y ≤ 2.0. When the content is too high, the polarization of the battery increases, which have no advantage to cycling.

According to some embodiments of this application, based on the mass of the electrolyte, the content of the ether trinitrile compound is Z%, and 0 ≤ Z ≤ 4.0. For example, Z is 0, 0.5, 1.0, 1.5, 2.0, 2.5, 3.0, 3.5, or the like. In some embodiments, 0 < Z ≤ 3.0.

According to some embodiments of this application, the electrochemical device satisfies 133 < C/Y ≤ 12500. According to some embodiments of this application, C/Y is 200, 300, 400, 500, 700, 900, 1200, 1500, 1700, 2000, 2500, 3000, 3500, 4000, 5000, 6000, 7000, 8000, 9000, 10000, or 12000, or falls within a range formed by any two thereof. In some embodiments, 1000 < C/Y ≤ 10000.

According to some embodiments of this application, the non-fluorinated cyclic carbonate further includes at least one of propylene carbonate or dimethyl vinyl carbonate.

According to some embodiments of this application, the ether multi-nitrile compound includes a nitrile compound represented by Formula I:

NC-R₁₁-H₂C-R₁₂-CN Formula I.

In Formula I, R₁₁ and R₁₂ are each independently selected from -(CH₂)a-O-(CH₂)b-, a and b are each independently an integer in 0 to 10, and a and b are not both 0.

According to some embodiments of this application, the ether dinitrile compound represented by Formula I includes one or more of ethylene glycol bis(2-cyanoethyl) ether, diethylene glycol bis(2-cyanoethyl) ether, triethylene glycol bis(2-cyanoethyl) ether, tetraethylene glycol bis(2-cyanoethyl) ether, 1,2-bis(2-cyanoethoxy)ethane, 1,3-bis(2-cyanoethoxy)propane, 1,4-bis(2-cyanoethoxy)butane, 1,5-bis(2-cyanoethoxy)pentane, or ethylene glycol bis(4-cyanobutyl) ether.

According to some embodiments of this application, the ether multi-nitrile compound includes a nitrile compound represented by Formula II:

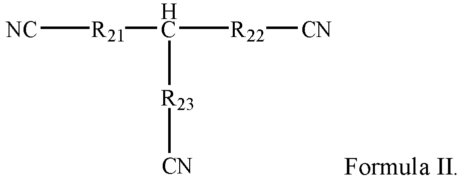

In Formula II, R₂₁, R₂₂, and R₂₃ are each independently selected from -(CH₂)a-O-(CH₂)b-, a and b are each independently an integer in 0 to 10, and a and b are not both 0.

According to some embodiments of this application, the ether trinitrile compound represented by Formula II includes one or more of 1,2,3-bis(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

According to some embodiments of this application, the ether multi-nitrile compound further includes a nitrile compound represented by Formula III:

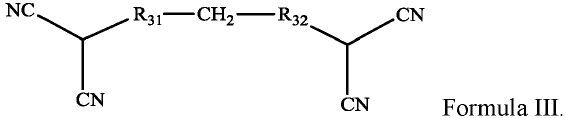

In Formula III, R₃₁ and R₃₂ are each independently selected from -(CH₂)a-O-(CH₂)b-, a and b are each independently an integer in 0 to 10, and a and b are not both 0 at the same time.

According to some embodiments of this application, the ether multi-nitrile compound includes at least one of:

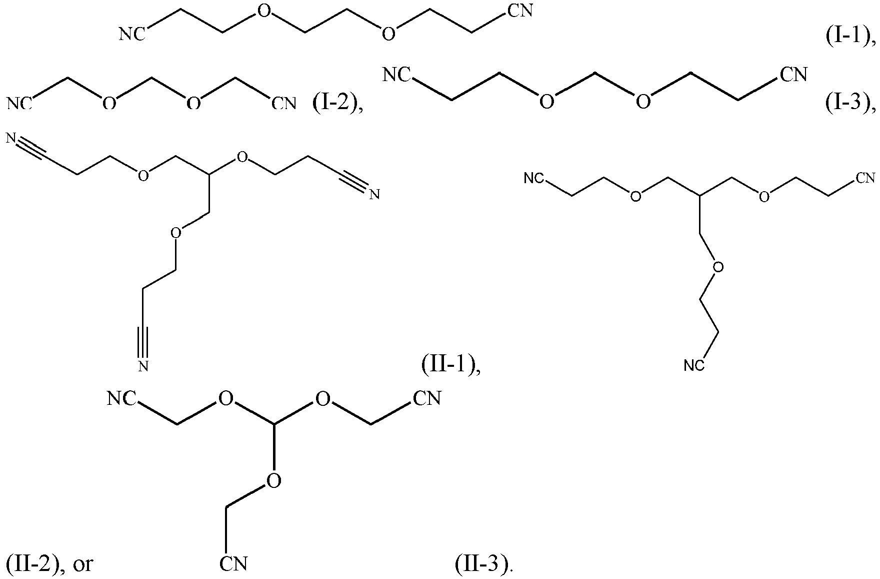

According to some embodiments of this application, the electrolyte further includes a multi-nitrile compound, and, based on the mass of the electrolyte, a content of the multi-nitrile compound is D%, where 0.02 ≤ Y/D ≤ 1.0. In some embodiments, Y/D is 0.05, 0.1, 0.2, 0.3, 0.4, 0.5, 0.6, 0.7, 0.8, or 0.9, or any range therebetween. When Y/D is too high, copper plating is likely to occur, and leads to an inferior interface of the negative electrode and affects performance. When the content is too low, the improvement effect is not significant. In this application, the multi-nitrile compound means a compound in which the quantity of cyano groups is greater than or equal to 2, except the ether multi-nitrile compound.

According to some embodiments of this application, the multi-nitrile compound includes at least one of nitrile compounds represented by Formula IV:

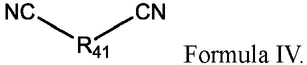

In Formula IV, R₄₁ is selected from 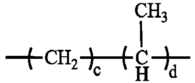 or 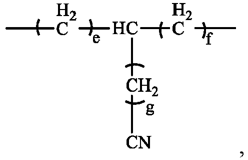 c, d, e, f, and g are each independently an integer in 0 to 10, and c and d are not both 0 at the same time.

According to some embodiments of this application, the multi-nitrile compound may be one or more selected from the following compounds: 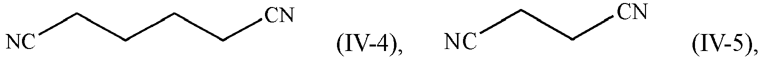 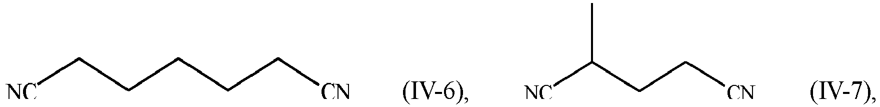 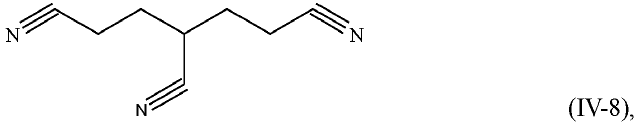 and

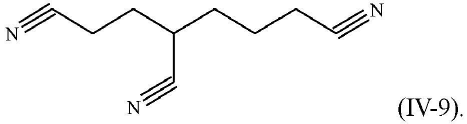

In this application, an integer in 0 to 10 means 0, 1, 2, 3, 4, 5, 6, 7, 8, 9, or 10.

According to some embodiments of this application, the electrolyte may further include a chain ester. The chain ester includes a chain carbonate and a chain carboxylate. The chain carbonate is selected from dimethyl carbonate, diethyl carbonate, ethyl methyl carbonate, and the like. The chain carboxylate is selected from ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-butyl n-butyrate, propyl isobutyrate, n-pentyl n-butyrate, n-pentyl isobutyrate, n-butyl n-butyrate, isobutyl isobutyrate, n-pentyl n-valerate, and the like.

According to some embodiments of this application, the electrolyte contains negative electrode film-forming additives such as LiBF₄, DTD, FEC, VC, and PS. The organic lithium salt is LiPF₆. According to some embodiments of this application, the lithium salt concentration is 0.3 mol/L to 2 mol/L. According to some embodiments of this application, the lithium salt concentration falls between 0.8 mol/L to 1.3 mol/L.

According to some embodiments of this application, the dopant element M of the positive electrode material includes at least one of Al, Mg, Ti, Zr, or W. After the positive electrode material is doped with the element M, the internal structure of the positive electrode can be stabilized, thereby enhancing the high-temperature intermittent cycle performance and the high-temperature cycle performance. According to some embodiments of this application, based on the mass of the positive electrode active material, the content of the element M is C ppm, 1000 ≤ C ≤ 22000. For example, C is 1000, 2000, 3000, 4000, 5000, 6000, 7000, 9000, 10000, 12000, 15000, 17000, 19000, 20000, or the like. In some embodiments of this application, 1000 ≤ C ≤ 12000.

According to some embodiments of this application, the element M includes Al and at least one of Mg, Ti, Zr, or W. In some embodiments of this application, based on the mass of the positive electrode active material, the content of Al is C1 ppm, and 0.2 ≤ C1/C < 1.

According to some embodiments of this application, the element M includes Mg and at least one of Al, Ti, Zr, or W.

According to some embodiments of this application, the element M includes Al and Mg, and at least one of Ti, Zr, or W. In some embodiments of this application, based on the mass of the positive electrode active material, the content of Al is C1 ppm, the content of Mg is C2 ppm, and 0.001 ≤ C2/C1 < 1.

According to some embodiments of this application, the positive electrode active material further includes an element M2. The element M2 includes at least one of La, Y, F, Na, Fe, Zn, or Cu.

According to some embodiments of this application, the content of the ether multi-nitrile compound in 1 gram of the positive electrode active material of the electrochemical device ranges from 0.0001 g to 0.06 g. For example, the content is 0.0005 g, 0.005 g, 0.010 g, 0.020 g, 0.030 g, 0.035 g, 0.045 g, 0.050 g, 0.055 g, or falls within a range formed by any two thereof. According to some embodiments of this application, the content of the ether multi-nitrile compound ranges from 0.0001 g to 0.02 g.

According to some embodiments of this application, a thickness of the positive electrode active material layer is 40 µm to 130 µm. According to some embodiments of this application, the thickness of the positive electrode active material layer is 50 µm, 60 µm, 65 µm, 70 µm, 75 µm, 80 µm, 85 µm, 90 µm, 95 µm, 100 µm, 110 µm, 120 µm, or 125 µm, or falls within a range formed by any two thereof. According to some embodiments of this application, the thickness of the positive electrode active material layer is 40 µm to 100 µm. In this application, the thickness of the positive electrode active material layer means a thickness of the positive electrode active material layer on one surface of the current collector.

The positive current collector used in the electrochemical device of this application may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

In some embodiments, a positive electrode material and a binder (as required, a conductive material and a thickener may be used additionally) may be dry-mixed and made into a sheet. The obtained sheet is crimped onto the positive current collector. Alternatively, such materials are dissolved or dispersed into a liquid medium to form a slurry. The positive current collector is coated with the slurry and dried.

In some embodiments, the binder may include at least one of polyvinylidene fluoride, a vinylidene fluoride-hexafluoropropylene copolymer, a styrene-acrylate copolymer, styrene-butadiene copolymer, polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, poly methyl methacrylate, polytetrafluoroethylene, or polyhexafluoropropylene. The conductive material may include at least one of conductive carbon black, graphite sheets, graphene, carbon nanotubes, or carbon fiber.

The electrochemical device according to this application further includes a negative electrode. The material, composition, and manufacturing method of the negative electrode may include any technology disclosed in the prior art.

According to some embodiments of this application, the negative electrode includes a negative current collector and a negative active material layer disposed on at least one surface of the negative current collector.

According to some embodiments of this application, the negative active material layer includes a negative active material. The negative active material may include a material into which lithium ions can be reversibly intercalated or from which lithium ions can be reversibly deintercalated, lithium metal, lithium metal alloy, or transition metal oxide. In some embodiments, the negative active material includes at least one of a carbon material or a silicon material. The carbon material includes at least one of graphite or hard carbon. The silicon material includes at least one of silicon, a silicon-oxygen compound, a silicon-carbon compound, or silicon alloy.

According to some embodiments of this application, the negative active material layer includes a binder. The binder may include various binder polymers. In some embodiments, the binder includes at least one of a polyvinylidene fluoride, a vinylidene fluoride-hexafluoropropylene copolymer, a polyamide, a polyacrylonitrile, a polyacrylic ester, a polyacrylic acid, a sodium polyacrylate, a sodium carboxymethyl cellulose, a polyvinylpyrrolidone, a polyvinyl ether, a poly methyl methacrylate, a polytetrafluoroethylene, a polyhexafluoropropylene, or styrene butadiene rubber.

According to some embodiments of this application, the negative active material layer further includes a conductive material to improve electrode conductivity. Any electrically conductive material may be used as the conductive material as long as the material does not cause chemical changes. In some embodiments, the conductive material includes at least one of conductive carbon black, acetylene black, carbon nanotubes, Ketjen black, conductive graphite, or graphene.

The electrochemical device according to this application further includes a separator. The material and the shape of the separator used in the electrochemical device according to this application are not particularly limited, and may be based on any technology disclosed in the prior art. In some embodiments, the separator includes a polymer or an inorganic compound or the like formed from a material that is stable to the electrolyte according to this application.

For example, the separator may include a substrate layer and a surface treatment layer. The substrate layer is a non-woven fabric, film or composite film, which, in each case, have a porous structure. The material of the substrate layer is selected from at least one of polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

A surface treatment layer is disposed on at least one surface of the substrate layer. The surface treatment layer may be a polymer layer or an inorganic compound layer, or a layer formed by mixing a polymer and an inorganic compound.

The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is at least one selected from: polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, and polyhexafluoropropylene.

The polymer layer includes a polymer. The material of the polymer is at least one selected from a polyamide, a polyacrylonitrile, an acrylate polymer, a polyacrylic acid, a polyacrylate, a polyvinylpyrrolidone, a polyvinyl alkoxide, a polyvinylidene difluoride, and a poly(vinylidene difluoride-hexafluoropropylene).

This application further provides an electronic device, including the electrochemical device according to this application.

The electronic device or apparatus according to this application is not particularly limited. In some embodiments, the electronic device according to this application includes, but is not limited to, a notebook computer, a pen-input computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

For brevity, merely a part of numerical ranges are specifically disclosed herein. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the context herein, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by using a measurement method commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The following describes this application in more detail with reference to specific embodiments. Understandably, the specific embodiments are merely intended to illustrate this application but not intended to limit the scope of this application.

Unless otherwise expressly specified, reagents, materials, and instruments used in the following embodiments and comparative embodiments are all commercially available.

The materials used in the following embodiments and comparative embodiments are set out below:
Ether dinitrile compound (Formula I): 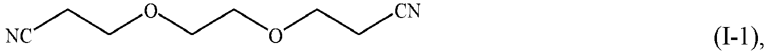 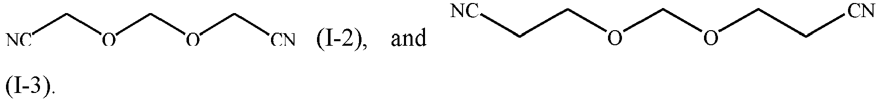
Ether trinitrile compound (Formula II): 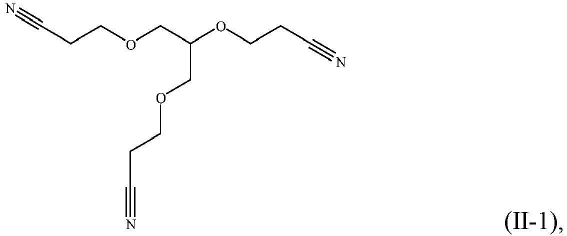 and 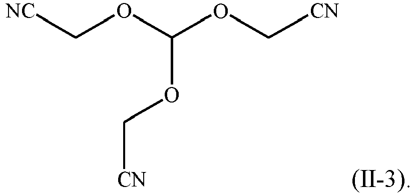
Multi-nitrile compound (Formula IV): 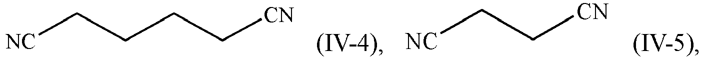 and

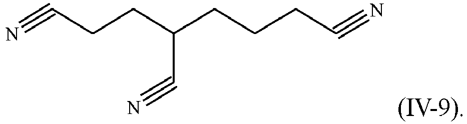

A lithium-ion battery is prepared in the following process:
Preparing a negative electrode plate: Stirring and mixing graphite as a negative active material, styrene butadiene rubber (SBR for short) as a binder, and sodium carboxymethyl cellulose (CMC for short) as a thickener in an appropriate amount of deionized water solvent thoroughly at a mass ratio of 97.4: 1.2: 1.4 to form a homogeneous negative slurry, coating a negative current collector (copper foil) with the slurry, and performing drying, cold calendering, and tab welding to obtain a negative electrode plate.

Preparing an electrolyte: In an argon atmosphere glovebox in which the water content is less than 10 ppm, mixing ethylene carbonate (EC for short), propylene carbonate (PC for short), and diethyl carbonate (DEC for short) evenly at a mass ratio of (EC+PC): DEC = 4:6, dissolving thoroughly dried lithium salt LiPF₆ in the foregoing nonaqueous solvent, adding 5 wt% fluoroethylene carbonate and 2 wt% 1,3-propane sultone, and finally adding a given amount of other additives to prepare the electrolyte disclosed in the embodiments.

Preparing a positive electrode plate: Stirring and mixing lithium cobaltate containing an element M, acetylene black as a conductive agent, and polyvinylidene difluoride (PVDF for short) as a binder in an appropriate amount of N-methyl-pyrrolidone (NMP for short) solvent thoroughly at a mass ratio of 96: 2: 2 to form a homogeneous positive slurry, coating an aluminum foil as a positive current collector with the slurry, and performing drying, cold calendering, and tab welding to obtain a positive electrode plate.

Separator: Using a PE porous polymer film as a separator.

Preparing a lithium-ion battery: Stacking the positive electrode plate, the separator, and the negative electrode plate sequentially, letting the separator be located between the positive electrode plate and the negative electrode plate to serve a separation function, winding the plates to obtain a bare cell, placing the bare cell into an outer package foil, injecting the prepared electrolyte into the cell that is dried, and performing steps such as vacuum packaging, standing, chemical formation, and shaping to complete preparing the lithium-ion battery.

Performing the foregoing preparation method to prepare the lithium-ion batteries disclosed in Embodiments 1to 39 and Comparative Embodiments 1to 4, and performing a high-temperature cycle test and a floating charge test on the batteries.

Performing the following test on the prepared lithium-ion battery under the following test conditions:

### High-temperature cycle test

Putting the battery in a 45 °C thermostat, charging the battery at a constant current of 1.5 C until a voltage of 4.4 V, charging the battery at a constant voltage of 4.4 V until a current of 0.05C, and discharging the battery at a constant current of 1.0C until a voltage of 3.0 V, thereby completing a charge and discharge cycle. Repeating the foregoing steps to complete 500 charge and discharge cycles, and monitoring the capacity retention rate, where the capacity retention rate = remaining discharge capacity/initial discharge capacity × 100%.

### High-temperature intermittent cycle test

Putting the battery in a 45 °C thermostat, charging the battery at a constant current of 0.5C until a voltage of 4.4 V, charging the battery at a constant voltage of 4.4 V until a current of 0.05C, recording the thickness of the battery as an initial cycle thickness of the battery, then leaving the battery to stand for 19.5 hours, and then discharging the battery at a constant current of 0.5C until a voltage of 3.0 V, and recording the discharge capacity at this time as an initial discharge capacity, thereby completing a charge and discharge cycle. Repeating the foregoing steps for 23 cycles. Thereafter, charging the battery at a constant current of 0.5C until a voltage of 4.35 V, charging the battery at a constant voltage of 4.35 V until a current of 0.05C, leaving the battery to stand for 19.5 hours, and then discharging the battery at a constant current of 0.5C until a voltage of 3.0 V, thereby completing a charge and discharge cycle. Repeating the foregoing steps for 113 cycles, and monitoring the capacity retention rate and the thickness growth rate, where the capacity retention rate = remaining discharge capacity/initial discharge capacity × 100%; and the thickness growth rate = (battery thickness after cycling - initial cycle thickness of the battery)/initial cycle thickness × 100%.

Battery thickness after cycling: thickness of the fully charged battery at the last cycle of the battery (that is, after the battery is charged at a constant voltage of 4.4 V until a current of 0.05C).

Specific embodiments, comparative embodiments, and test results are shown in Tables 1 to 4.

Table 1 shows the impact caused to the high-temperature intermittent cycle performance and the high-temperature cycle performance of the lithium-ion battery by the weight percent X% of ethylene carbonate in the electrolyte, the weight percent A% of the ether multi-nitrile compound in the electrolyte (in which the weight percent of the ether dinitrile compound in the electrolyte is Y%, and the weight percent of the ether trinitrile compound in the electrolyte is Z%), and the content C ppm of the dopant element M in the positive electrode active material. In all the embodiments and comparative embodiments shown in Table 1, the dopant element in the positive electrode active material is Al. Based on the mass of the positive electrode active material, the content of the Al element is 1000 ppm.

**Table 1**

| Embodiment and comparative embodiment | X | Ether multi-nitrile compound | | | X+A value | C/A value | C/Y value | 136 intermittent cycles at 45 °C | | Capacity retention rate after 500 cycles at a high |
|---|---|---|---|---|---|---|---|---|---|---|
| | | Ether dinitirile | Ether trinitrile | A | | | | | | |
| | | Compound/Y | Compound/Z | | | | | Capacity retention | Thickness growth rate | |
| Embodiment 1 | 10 | I-1/0.1 | - | 0.1 | 10.1 | 10000 | 10000 | 62.00 | 14.50 | 70.60 |
| Embodiment 2 | 10 | 1-1/0.5 | - | 0.5 | 10.5 | 2000 | 2000 | 64.70 | 14.00 | 70.90 |
| Embodiment 3 | 10 | 1-1/1.0 | - | 1.0 | 11 | 1000 | 1000 | 63.30 | 13.70 | 71.30 |
| Embodiment 4 | 10 | 1-2/0.5 | - | 0.5 | 10.5 | 2000 | 2000 | 64.50 | 13.40 | 74.00 |
| Embodiment 5 | 10 | 1-3/0.5 | - | 0.5 | 10.5 | 2000 | 2000 | 61.30 | 13.60 | 73.20 |
| Embodiment 6 | 10 | 1-1/0.5 | II-1/0.5 | 1.0 | 11 | 1000 | 2000 | 68.90 | 12.90 | 75.60 |
| Embodiment 7 | 9.0 | 1-1/1.5 | II-1/0.5 | 2.0 | 11 | 500 | 666.7 | 63.50 | 12.80 | 71.80 |
| Embodiment 8 | 10 | - | II-1/1.0 | 1.0 | 11 | 1000 | - | 62.10 | 14.30 | 70.50 |
| Embodiment 9 | 10 | 1-1/0.5 | II-1/2.0 | 2.5 | 12.5 | 400 | 2000 | 70.80 | 12.30 | 77.90 |
| Embodiment 10 | 12 | I-1/0.1 | II-1/0.4 | 0.5 | 12.5 | 2000 | 10000 | 70.90 | 12.70 | 76.80 |
| Embodiment 11 | 7.5 | 1-1/1.5 | II-1/3.5 | 5.0 | 12.5 | 200 | 666.7 | 68.80 | 8.90 | 69.50 |
| Embodiment 12 | 5.0 | 1-1/3.5 | II-1/4.0 | 7.5 | 12.5 | 133.3 | 285.7 | 66.20 | 7.10 | 65.30 |
| Embodiment 13 | 10 | 1-1/0.5 | II-3/1.0 | 1.5 | 11.5 | 666.7 | 2000 | 69.40 | 13.10 | 74.40 |
| Embodiment 14 | 10 | 1-1/1.0 | II-1/2.0 | 3 | 13 | 333.3 | 1000 | 69.10 | 13.60 | 74.70 |
| Embodiment 15 | 14 | 1-1/0.5 | II-1/0.5 | 1.0 | 15 | 1000 | 2000 | 70.10 | 13.80 | 77.20 |
| Embodiment 16 | 12.5 | 1-1/0.5 | II-1/2.0 | 2.5 | 15 | 400 | 2000 | 69.80 | 13.20 | 77.50 |
| Embodiment 17 | 7.5 | 1-1/0.5 | II-1/2.0 | 2.5 | 10 | 400 | 2000 | 69.40 | 12.60 | 76.90 |
| Embodiment 18 | 2.5 | 1-1/0.5 | II-1/2.0 | 2.5 | 5 | 400 | 2000 | 68.70 | 11.00 | 72.10 |
| Comparative Embodiment 1 | 16 | - | - | - | 16 | - | - | 45.20 | 26.10 | 51.30 |
| Comparative Embodiment 2 | 15 | 1-1/1.0 | - | 1.0 | 16 | 1000 | 1000 | 56.40 | 22.70 | 53.10 |
| Comparative Embodiment 3 | 13 | 1-1/1.0 | II-1/2.0 | 3.0 | 16 | 333.3 | 1000 | 59.70 | 21.50 | 58.30 |

As can be learned from comparison between Embodiments 1to 3 and Comparative Embodiments 1to 3 in Table 1, when the battery contains both ether nitrile and non-fluorinated carbonate and X+A ≤ 15, the high-temperature intermittent cycle performance and the high-temperature cycle performance of the battery are excellent. A high-temperature intermittent cycle may break down into two processes: a high-temperature cycle process and a high-SOC storage process. The non-fluorinated cyclic carbonate can be reduced to form a better SEI to facilitate a cycling process. However, the non-fluorinated cyclic carbonate is scarcely stable under a high temperature, and is prone to failure caused by gassing at the end of the high-temperature intermittent cycling. The ether multi-nitrile compound contains a specific nitrile functional group that can be adsorbed onto a surface of the positive electrode. Organic molecules on the surface of the positive electrode can well separate the easily oxidizable ingredients in the electrolyte from the surface of the positive electrode, thereby greatly reducing the effect of oxidation caused to the electrolyte by the surface of the positive electrode of the lithium-ion battery that is in a charging state, and suppressing the gassing of the lithium-ion battery during high-temperature intermittent cycling. However, the impedance of the ether multi-nitrile compound is relatively high. When the content of the ether multi-nitrile compound is too high, cycle polarization increases, and the cycle performance is affected. When the non-fluorinated cyclic carbonate coordinates with the ether multi-nitrile compound to satisfy the relationship of X+A ≤ 15, an excellent SEI can be formed, the oxidation and gassing of the non-fluorinated cyclic carbonate and the positive electrode are decreased, and the high-temperature intermittent cycle performance and the high-temperature cycle performance are improved effectively.

As can be learned from comparison between Embodiment 3, Embodiment 6, and Embodiment 8, the ether multi-nitrile compound that contains both the ether dinitrile compound and the ether trinitrile compound can further improve the high-temperature intermittent cycle performance and the high-temperature cycle performance.

As can be learned from comparison between Embodiments 9to 12, when X+A ≤ 15 and the sum of the content of the ether dinitrile compound and the content of the ether trinitrile compound satisfies 0.3 ≤ Y+Z ≤ 4, the high-temperature intermittent cycle performance and the high-temperature cycle performance are further enhanced.

Table 2 shows the impact caused to the high-temperature intermittent cycle performance and the high-temperature cycle performance of the lithium-ion battery by the weight percent A% of the ether multi-nitrile compound in the electrolyte, the type and content C ppm of the dopant element M in the positive electrode active material. In the embodiments and comparative embodiments shown in Table 2, the content of ethylene carbonate is 10%; the structural formula of the ether trinitrile compound is II-1, and the content of the ether trinitrile compound is 2.0%; and the structural formula of the ether dinitrile compound is I-1, and the content of the ether dinitrile compound is Y%. When the dopant element M in the positive electrode active material includes Al and other elements, the content of Al is C1 ppm, and the content of Mg is C2 ppm.

**Table 2**

| Embodime nt and comparativ e embodime nt | Y | Element M | | C/A valu e | C/Y valu e | C1/C valu e | C2/C 1 valu e | 136 intermittent cycles at 45 °C | | Capacity retention rate after 500 cycles at a high temperature of 45 °C (%) |
|---|---|---|---|---|---|---|---|---|---|---|
| | | Type of element | C | | | | | Capacity retention rate (%) | Thickness growth rate (%) | |
| Embodime nt 9 | 0.5 | Al | 1000 | 400 | 2000 | 1 | - | 70.80 | 12.30 | 77.90 |
| Embodime nt 19 | 1.0 | Al | 1000 | 333. 3 | 1000 | 1 | - | 70.70 | 11.50 | 77.60 |
| Embodime nt 20 | 0.5 | Al | 2000 | 800 | 4000 | 1 | - | 72.40 | 12.10 | 78.40 |
| Embodime nt 21 | 0.5 | Al | 3000 | 1200 | 6000 | 1 | - | 72.80 | 11.70 | 78.70 |
| Embodime | 0.5 | Al | 4000 | 1600 | 8000 | 1 | - | 72.90 | 11.60 | 78.90 |
| nt 22 | | | | | | | | | | |
| Embodime nt 23 | 0.5 | Al | 5000 | 2000 | 1000 0 | 1 | - | 72.50 | 11.60 | 78.60 |
| Embodime nt 24 | 0.5 | Al+Mg | 3000+2000 | 2000 | 1000 0 | 0.6 | 0.67 | 73.50 | 11.80 | 78.70 |
| Embodime nt 25 | 0.5 | Mg | 2000 | 800 | 4000 | - | - | 73.80 | 12.90 | 78.30 |
| Embodime nt 26 | 0.5 | Mg | 5000 | 2000 | 1000 0 | - | - | 73.30 | 12.10 | 78.50 |
| Embodime nt 27 | 0.5 | Al+Mg | 3000+3000 | 2400 | 1200 0 | 0.5 | 1.0 | 73.60 | 11.50 | 78.60 |
| Embodime nt 28 | 0.5 | Al+Mg | 3000+1000 | 1600 | 8000 | 0.75 | 0.33 | 73.90 | 11.30 | 78.90 |
| Embodime nt 29 | 0.5 | Al+Mg | 3500+500 | 1600 | 8000 | 0.88 | 0.14 | 73.80 | 11.20 | 79.10 |
| Embodime nt 30 | 1 | Al+Mg+Ti | 900+500+500 | 633. 3 | 1900 | 0.47 | 0.56 | 74.10 | 10.90 | 79.50 |
| Embodime nt 31 | 1 | Al+Mg+Ti | 2000+500+500 | 1000 | 3000 | 0.67 | 0.25 | 74.80 | 10.50 | 80.10 |
| Embodime nt 32 | 1 | Al+Mg+Ti | 1000+400+300 | 566. 7 | 1700 | 0.59 | 0.4 | 74.30 | 10.70 | 78.80 |
| Embodime nt 33 | 1 | Al+Mg+Ti+Zr | 2000+1000+500+300 | 1266 .7 | 3800 | 0.53 | 0.5 | 75.30 | 10.10 | 80.70 |
| Embodime nt 34 | 1 | Al+Mg+Ti+Zr | 1000+800+500+300 | 866. 7 | 2600 | 0.38 | 0.8 | 75.10 | 10.30 | 80.4 |
| Embodime nt 35 | 1 | Al+Mg+Ti+Zr+ W | 5000+3000+2000+10 00+1000 | 4000 | 1200 0 | 0.42 | 0.6 | 74.50 | 10.70 | 78.20 |
| Embodime nt 36 | 1 | Al+Mg+Ti+Zr+ W | 2000+1000+800+500 +500 | 1600 | 4800 | 0.42 | 0.5 | 75.60 | 9.7 | 81.2 |
| Embodime nt 37 | 1 | Al+Mg+Ti+Zr+ W | 4500+3000+2000+20 00+1000 | 4166 .7 | 1250 0 | 0.36 | 0.67 | 68.40 | 13.60 | 76.90 |
| Comparati ve Embodime | 3 | Al | 400 | 80 | 133. 3 | - | - | 67.70 | 13.20 | 76.30 |
| nt 4 | | | | | | | | | | |

Comparative Example 4 shows that when either 1000 ≤ C ≤ 22000 or the content of the ether dinitrile ≤ 2% is not satisfied, the high-temperature intermittent cycle performance and the high-temperature cycle performance of the battery are affected. That is because after the positive electrode material is doped with the element M, the M-O bond is stronger than the Co-O bond, and, after delithiation of the positive electrode, can stabilize Co and prevent dissolution of Co; or, can occupy lattice spacing, and, after delithiation of the positive electrode, occupy lithium sites to stabilize the structure and improve battery performance. However, when the dopant content is too high, the working of effective lithium will be affected, and polarization will increase. The ether dinitrile compound can stabilize, on the interface, the dissolution of cobalt from the positive electrode, and serve a function of coordinating with the element M. When C/A satisfies 500 ≤ C/A ≤ 4000, the overall polarization of the battery can be further decreased, and the cycle performance can be improved.

Table 3 shows the impact caused to the high-temperature intermittent cycle performance and the high-temperature cycle performance of the lithium-ion battery by the weight percent Y% of the ether dinitirile compound in the electrolyte and the weight percent D% of other multi-nitrile compounds such as a non-ether nitrile compound in the electrolyte. In the embodiments shown in Table 3, the content of ethylene carbonate is 10%, the structural formula of the ether trinitrile compound is II-1, and the content of the ether trinitrile compound is 2.0%. The dopant element in the positive electrode active material is Al. Based on the total mass of the positive electrode active material, the content of the Al element is 1000 ppm.

**Table 3**

| Serial number | Ether dinitirile | | Multi-nitrile compound | | Y/D value | 136 intermittent cycles at 45 °C | | Capacity retention rate after 500 cycles at a high temperature of 45 °C (%) |
|---|---|---|---|---|---|---|---|---|
| | Compound | Y | Compound | D | | Capacity retention rate (%) | Thickness growth rate (%) | |
| Embodiment 9 | I-1 | 0.5 | - | - | - | 70.80 | 12.30 | 77.90 |
| Embodiment 38 | I-1 | 1 | IV-4 | 1 | 1 | 72.30 | 11.60 | 78.40 |
| Embodiment 39 | I-1 | 1 | IV-4 | 2.5 | 0.4 | 74.50 | 10.30 | 80.10 |
| Embodiment 40 | I-1 | 0.5 | IV-4+IV-5 | 3+2 | 0.1 | 74.80 | 9.50 | 80.30 |
| Embodiment 41 | I-1 | 0.2 | IV-4+IV-5+ IV-9 | 3+3+3 | 0.02 | 71.20 | 12.00 | 78.10 |
| Embodiment 42 | I-1 | 1.1 | IV-4 | 1 | 1.1 | 67.30 | 12.80 | 75.70 |

As can be learned from comparison between Embodiments 38 to 42 and Embodiment 9, when 0.02 ≤ Y/D ≤1, the high-temperature intermittent cycle performance and the high-temperature cycle performance can be further improved. That may be because both O and CN in the ether multi-nitrile can easily complex with Cu²⁺ to form a complex. The complex is unstable and prone to dissolve in the electrolyte to corrode the copper foil. The CN in the multi-nitrile compound is also capable of complexing with Cu²⁺ to form a complex, but the formed complex can exist stably on the surface of the copper foil without corroding the copper foil. Using the multi-nitrile compound together with the ether multi-nitrile can suppress copper plating and achieve excellent high-temperature cycle performance.

Table 4 shows the impact caused to the high-temperature intermittent cycle performance and the high-temperature cycle performance of the lithium-ion battery by the mass of the ether multi-nitrile in the positive electrode active material and the thickness of the positive electrode active material layer. Parameters in each embodiment shown in Table 4 are the same as those in Embodiment 9 except that the mass of the ether multi-nitrile in 1 gram of the positive electrode active material and the thickness of the positive electrode active material layer are different from those in Embodiment 9 (for details, see Table 4).

**Table 4**

| Embodiment | Mass of ether multi-nitrile in 1 gram of positive electrode active material (g) | Thickness of positive electrode active material layer (µm) | 136 intermittent cycles at 45 °C | | Capacity retention rate after 500 cycles at high temperature of 45 °C (%) |
|---|---|---|---|---|---|
| | | | Capacity retention rate (%) | Thickness growth rate (%) | |
| Embodiment 9 | 0.0075 | 87 | 70.80 | 12.30 | 77.90 |
| Embodiment 43 | 0.015 | 87 | 68.80 | 8.90 | 69.50 |
| Embodiment 44 | 0.025 | 87 | 66.20 | 7.10 | 65.30 |
| Embodiment 45 | 0.0075 | 75 | 69.80 | 11.50 | 75.20 |
| Embodiment 46 | 0.0075 | 60 | 69.4 | 11.20 | 77.3 |
| Embodiment 47 | 0.0075 | 105 | 67.50 | 12.70 | 70.70 |
| Embodiment 48 | 0.0075 | 125 | 65.40 | 14.80 | 64.90 |

As can be seen from Table 4, when the content of the ether multi-nitrile compound in 1 gram of the positive electrode active material ranges from 0.0001 g to 0.06 g, the battery achieves good overall performance. When the thickness of the positive electrode active material layer falls within the foregoing range, the positive electrode active material fits well with the electrolyte to ensure that a good protection layer is formed between the electrolyte and the positive electrode active material layer while bringing a relatively small impact on other performance indicators. When the thickness of the positive electrode active material layer falls within a range of 40 µm to 130 µm, the electrolyte well infiltrates the positive electrode active material layer while ensuring a high energy density of the battery, so that the overall performance of the battery can be further improved.

Although illustrative embodiments have been demonstrated and described above, a person skilled in the art understands that the above embodiments are not to be construed as a limitation on this application, and changes, replacements, and modifications may be made to the embodiments without departing from the spirit, principles, and scope of this application.

## Claims

1. An electrochemical device, comprising:
an electrolyte, wherein the electrolyte comprises a non-fluorinated cyclic carbonate and an ether multi-nitrile compound, the non-fluorinated cyclic carbonate comprises ethylene carbonate, and, based on a mass of the electrolyte, a content of the ethylene carbonate is X%, and a content of the ether multi-nitrile compound is A%; and
a positive electrode, wherein the positive electrode comprises a positive electrode active material layer and a positive current collector, the positive electrode active material layer comprises a positive electrode active material , the positive electrode active material comprises an element M, the element M comprises at least one of Al, Mg, Ti, Zr, or W, and, based on a mass of the positive electrode active material, a content of the element M is C ppm, and 1000 ≤ C ≤ 22000,
wherein, X + A ≤ 15 and 133 ≤ C/A ≤ 22000.

2. The electrochemical device according to claim 1, wherein the ether multi-nitrile compound comprises at least one of an ether dinitrile compound or an ether trinitrile compound, and, based on the mass of the electrolyte, a content of the ether dinitrile compound is Y%, and a content of the ether trinitrile compound is Z%, wherein 0.1 ≤ Y+Z ≤ 7.5.

3. The electrochemical device according to claim 1, wherein 400 ≤ C/A ≤ 4000, and 2.5 ≤ X ≤ 14.

4. The electrochemical device according to claim 2, wherein at least one of conditions(a) to (c) are satisfied:
(a) 0 < Y ≤ 3.5;
(b) 0 ≤ Z ≤ 4.0; or
(c) 133 < C/Y ≤ 12500.

5. The electrochemical device according to claim 2, wherein the electrolyte further comprises a multi-nitrile compound, and, based on the mass of the electrolyte, a content of the multi-nitrile compound is D%, wherein 0.02 ≤ Y/D ≤ 1.0.

6. The electrochemical device according to claim 1, wherein the ether multi-nitrile compound comprises at least one of nitrile compounds represented by Formula I and Formula II:
NC-R₁₁-H₂C-R₁₂-CN Formula I; 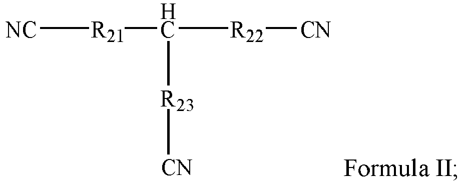
and in Formula I and Formula II, R₁₁, R₁₂, R₂₁, R₂₂, and R₂₃ are each independently selected from -(CH₂)a-O-(CH₂)b-, a and b are each independently an integer in 0 to 10, and a and b are not both 0 at the same time.

7. The electrochemical device according to claim 5, wherein the multi-nitrile compound comprises at least one of nitrile compounds represented by Formula IV: 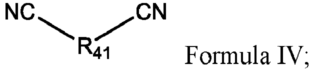 and in Formula IV, R₄₁ is selected from 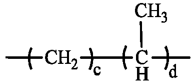 or 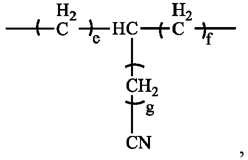 c, d, e, f, and g are each independently an integer in 0 to 10, and c and d are not both 0.

8. The electrochemical device according to claim 1, wherein the content of the ether multi-nitrile compound in 1 gram of the positive electrode active material ranges from 0.0001 g to 0.06 g.

9. The electrochemical device according to claim 1, wherein the element M satisfies at least one of conditions (d) to (f):
(d) the element M contains Al and at least one of Mg, Ti, Zr, or W;
(e) the element M contains Mg and at least one of Al, Ti, Zr, or W; or
(f) the element M contains Al and Mg, and at least one of Ti, Zr, or W.

10. The electrochemical device according to claim 9, wherein when the condition (d) is satisfied, based on the mass of the positive electrode active material, a content of Al is C1 ppm, and 0.2 ≤ C1/C < 1.

11. The electrochemical device according to claim 9, wherein when the condition (f) is satisfied, based on the mass of the positive electrode active material , a content of Al is C1 ppm, a content of Mg is C2 ppm, and 0.001 ≤ C2/C1 < 1.

12. The electrochemical device according to claim 1, wherein the positive electrode active material further comprises an element M2, and the element M2 comprises at least one of La, Y, F, Na, Fe, Zn, or Cu.

13. The electrochemical device according to claim 1, wherein a thickness of the positive electrode active material layer is 40 µm to 130 µm.

14. An electronic device, comprising the electrochemical device according to any one of claims 1 to 13.
